# EUROPEAN PATENT SPECIFICATION

(11) **EP 3 165 563 B1**
(45) Date of publication and mention of the grant of the patent: **01.01.2020**
(21) Application number: 16197504.0
(22) Date of filing: 07.11.2016
(51) Int. Cl.: C08J 9/00, C08L 23/28, C08L 23/34, C08K 5/02, C08L 9/00, C08L 9/06, C08L 11/02, C08K 3/013

(54) **EXPANDABLE AND CROSSLINKABLE ELASTOMERIC FORMULATION FOR THE MANUFACTURE OF INSULATION MATERIALS EXHIBITING HIGH FIRE RETARDANCY AND LOW SMOKE CREATION PROPERTIES**
EXPANDIERBARE UND KREUZVERNETZBARE ELASTOMERFORMULIERUNG FÜR DIE HERSTELLUNG VON ISOLATIONSMATERIALIEN MIT HOHEN FLAMMHEMMUNGSEIGENSCHAFTEN UND GERINGEN RAUCHENTWICKLUNGSEIGENSCHAFTEN
FORMULATION ÉLASTOMÈRE RÉTICULABLE ET EXPANSIBLE POUR LA FABRICATION DE MATÉRIAUX D'ISOLATION PRÉSENTANT UN CARACTÈRE IGNIFUGE ÉLEVÉ ET DE FAIBLES PROPRIÉTÉS DE CRÉATION DE FUMÉE

(30) Priority: 06.11.2015 EP 15193557
(43) Date of publication of application: 10.05.2017
(73) Proprietor: Kaimann GmbH, 33161 Hövelhof (DE)
(72) Inventor: Kaimann, Georg Josef, 33161 Hövelhof (DE); Springub, Ralf, 48167 Münster (DE); Weidinger, Jürgen Georg, 33102 Paderborn (DE)
(74) Representative: Hoffmann Eitle

(56) References cited:
- EP-A1- 2 450 398
- EP-A1- 2 824 134
- EP-B1- 2 261 305

## Description

### Field of the Invention

The present invention relates to an expandable and crosslinkable elastomeric formulation for the manufacture of thermal and/or acoustic shielding materials, such as foam or sponge, which need to fulfil extended requirements concerning fire properties, such as flammability and smoke creation, the manufacturing of such formulations and the use of such formulations and their resulting products.

### Technical background

Flexible foamed products have been used for insulation purposes since decades (FEF = factory made elastomeric foam, e.g. according to EN 14304). Preferably, such products are based on elastomeric polymers, mostly NBR or more precisely NBR/PVC blends, as can be found in the FEF manufacturers' literature. A drawback of such materials is their need for additional protection from fire, i.e. the use of fire retardant substances (FR), which makes the formulation more expensive and less expandable (most FRs are solids and increase the raw as well as the foam density). Another disadvantage is the significant creation of smoke in case of ignition, making it difficult for such classic formulations to fulfil nowadays' fire protection regulations which consider the flame retardancy in combination with the smoke density (see comparative examples in table 3). The background of such regulation change is to enable detecting emergency exits and to reduce the risk of smoke intoxication in case of fire. Some attempts have been made to overcome the FR/smoke dilemma, such as in EP 2261305 B1 and EP 2824134 A1, where the NBR in classic formulations is replaced by either chloroprene or chlorinated polyethylene. Basically, chlorine-containing polymers such as polychloroprene (CR) and chlorinated polymers such as chlorosulfonated polyethylene (CSM) or chlorinated polyethylene (CPE, CM) have been investigated for foamability with some success. Except the a.m. documents, however, no suitable properties for the manufacture of insulation foams had been obtained, especially for CSM: closed-cell low density foam as it would be required for thermal insulation purposes could not be obtained. However, at least the Japanese patent families by CSM manufacturers JPH 03223344 (A), JPH 03244642 (A), JPH 0480236 (A): basic works on expanding CSM; and JPH 01163224, JPH 01311138, JPH 02107201: CSM blended with CR or EVA to alternate properties (e.g. for shoe soles) exhibit the possibility of CSM to be expanded and crosslinked similar to rubber polymers. KR 20010057470 (A) mentions foaming agent in CSM formulations, JPS 6469643 (A) and JPS 6469644 (A) are dealing with CSM in combination with chlorinated paraffin (CP) for better plasticisation and mixing, more or less ignoring the beneficial FR effect of CPs. KR 100286475 and JPH 0476027 (A) describe kinds of CSM sponge, means, open cell material not being suitable for thermal insulation anyway. CN 104293197 (A) is describing a foam coating based on CSM with insulation effect, but is strengthening low temperature flexibility and not the FR properties. RU 2210582 (C2), too, is dealing with a coating mentioning its FR properties, but with CSM not being foamed; the insulating matter is graphite granules. The beneficial influence of CSM on fire retardancy and smoke creation has at least been recognized in the latter patent, as well as in CN 101210389 (A), however, this document is only mentioning massive CSM. In general, the manufacturing of chemically blown CSM foam is not easily feasible, as the material is majorly thermoplastic by nature; standard vulcanisation and expansion methods as applied on rubber material will fail. A majority of a.m. prior art therefore is also dealing with alternative vulcanisation agents or co-blending with other crosslinkable materials, such as CR or EVA. The difficulties in crosslinking are one important reason for CSM not being considered as suitable basis for thermal insulation materials.

Furthermore, EP 2450398 A1 relates to a material for thermal and/or acoustic insulation comprising an expanded elastomeric and/or thermoplastic elastomer blend based on styrenic organic polymer and chlorinated organic polymer. The blend may comprise 30 to 100 phr of a styrene-substituted polymer such as a styrene butadiene polymer, at least 10 phr - related to the styrene substituted polymer - of a chlorinated organic polymer of thermoplastic or thermoplastic elastomer nature, and at least 30 phr of a halogenated oil, fat or wax.

### Problem to be solved by the Invention

It is a first object of the present invention to provide an elastomer product that does not show the abovementioned deficiencies but is flame retardant and creates low amounts of smoke in case of fire and is expanded to a low density such that good thermal and/or acoustic insulation properties result while good mechanical properties are maintained. It is a second object of the present invention to provide a formulation that is suitable for the manufacture of an elastomer product having the aforementioned properties.

### Summary of the Invention

Surprisingly, it was found that the aforementioned technical problem is solved by an elastomer product obtainable from a formulation as described in the following by expanding and crosslinking.

Thus, in a first aspect the present invention provides a formulation comprising
(A) at least one type of chlorosulfonated polyethylene (CSM) which is present in the formulation in an amount of 50 to 80 phr (parts per hundred parts of rubber),
(B) at least one halogenated organic substance of a molecular weight of at least 500 g/mol which is present in the formulation in an amount of 15 to 150 phr and which is not (A) or (D),
(C) at least one polymer selected from the group consisting of poly(butadiene), poly(styrene butadiene), poly(acrylonitrile butadiene), poly(isobutene), poly(isoprene) and poly(isobutene-isoprene) which is present in the formulation in an amount of 5 to 50 phr,
(D) at least one halogen-containing polymer or halogenated polymer that is crosslinkable and which is present in the formulation in an amount of 5 to 45 phr and which is neither (A) nor (B),
(E1) at least one crosslinking agent suitable for crosslinking at least one of the components (A), (C) and (D), wherein each crosslinking agent is present in the formulation in an amount of 5 to 50 phr,
(E2) at least one expanding agent suitable for expanding the formulation which is present in the formulation in an amount of 15 to 200 phr, and
(F) at least one filler which is present in the formulation in an amount of 50 to 600 phr.

This formulation can be crosslinked and expanded to an elastomer product containing closed or open cells, preferably closed cells.

In a second aspect the present invention provides an elastomer product obtainable from the formulation according to the first aspect of the invention by expanding and crosslinking.

The thus obtained elastomer product is useful for a variety of applications, including thermal and/or acoustic insulation and/or acoustic and/or vibration damping and/or mechanical protection.

### Detailed description of the Invention

The claimed material comprises compound (A), which is at least one type of chlorosulfonated polyethylene (CSM) obtained from PE, preferably linear HDPE, especially preferred with a branching content of less than 3% as determined according to ASTM D 5576. The chlorine content of said CSM is at least 20 weight-%, preferably at least 35 weight-% relative to the total weight of CSM as determined according to ISO 1158. Compound (A) is present in the formulation in a range of 50 to 80 phr (parts per hundred parts of rubber).

Hundred parts of rubber in the sense of this invention represents the total weight sum of all elastomers or elastomeric polymers in the claimed materials, e.g. polymers which can be summarized as "R" or "M" rubbers according to ISO 1629, such as BR, CR, HNBR, NBR, SBR, CM, CSM, or EPDM.

The formulation of the present invention furthermore comprises at least one compound (B) which is a halogenated organic substance of a molecular weight of at least 500 g/mol. The halogen content of (B) may be in the range of 40 to 80 weight-%, preferably 50 to 70 weight-% relative to the total weight of (B) as determined according to ISO 1158. It can be determined by means of mass spectrometry whether a compound has a molecular weight of at least 500 g/mol. It is not necessary for this purpose to determine the exact molecular weight of a compound having a molecular weight significantly higher than 500 g/mol.

Preferably, the halogen in compound (B) is chlorine. More preferably, the halogen in compound (B) is chlorine and the chlorine content is in the range of 40 to 80 weight-%, more preferably 50 to 70 weight-% as determined according to ISO 1158 relative to the total weight of (B). Typical substances representing (B) may be halogenated paraffin or halogenated polyglycol, preferably chlorinated paraffin or chlorinated polyglycol. Preferably, component (B) is chlorinated paraffin.

In the sense of the present invention, the term "halogenated" in relation to a compound means that covalent bonds between halogen atoms and atoms of said compound are formed by reacting the organic molecule with a suitable halogenating agent. For instance, chlorinated polyethylene (CPE) is formed by reacting polyethylene with a suitable chlorinating agent such that covalent bonds between chlorine atoms and carbon atoms of the polyethylene molecule are formed. Accordingly, CPE represents a halogenated polymer in the sense of the present invention.

In the sense of the present invention, the term "halogen-containing" in relation to a compound means that a polymer (or oligomer) is formed by polymerizing (or oligomerizing) a monomer containing at least one halogen atom in a covalent bond. For instance, polyvinylchloride (PVC) is formed by polymerizing vinylchloride, i.e. a monomer containing a halogen in a covalent bond. Accordingly, PVC represents a halogen-containing polymer in the sense of the present invention.

Compound (B) is acting as a compatibilizing agent to ensure miscibility as well as stability of mixtures and final products against phase transition or demixing. The compound (B) will lead to coating of filler(s) (F) but also act as bridging from filler(s) to polymers (A), (C), (D) and among these polymers. The common effect of compounds (B) and (D) on the stable and sustainable integration of compound (C) into the matrix CSM/filler (A)/(F) here is of major importance, not for mixing only, but for the quality of the expanded and crosslinked foam product made from the claimed material. Compound (B) is present in the formulation of the present invention in an amount of 15 to 150 phr, preferably 25 to 120 phr, more preferably 80 to 110 phr.

The formulation of the present invention comprises at least one compound (C) which is at least one polymer selected from poly(butadiene) both in *cis* and *trans* configuration, poly(styrene butadiene), poly(acrylonitrile butadiene), poly(isobutene), poly(isoprene) and poly(isobutene-isoprene). Preferably, component (C) is butadiene rubber (BR). Compound (C) is present in the formulation of the present invention in an amount of 5 to 50 phr, preferably 10 to 30 phr, more preferably 10 to 20 phr.

The formulation of the present invention comprises at least one compound (D) which is a halogen-containing or halogenated polymer that can be crosslinked by means of using a crosslinking system (E). Compound (D) may be of elastomeric nature containing double bonds in the polymer backbone ("R" materials), like polychloroprene (CR) or halobutyl (BIIR, CIIR); or of elastomeric/thermoplastic nature showing no double bonds in the polymer backbone ("M" materials), like chlorinated polyethylene (CM, CPE), but not CSM. Compound (D) will provide additional FR performance to the claimed material, as the halogen atoms show different bonding situation, bonding energy and different electronic environment than those in compound (A). This will lead to cleavage of halogen bonds and release of halogen radicals (which are efficient fire stoppers and act as the actual FR) at a broader range of energy levels making the FR performance more versatile concerning different regulatory and normative requirements and test conditions (see examples). The compound (B) is acting in an equal manner. (D) is present in the formulation of the present invention in an amount of 5 to 45 phr, preferably 10 to 40 phr, more preferably 20 to 30 phr. Preferably, component (D) is polychloroprene (CR).

The formulation of the present invention furthermore comprises at least one crosslinking agent (E1) suitable for crosslinking at least one of the components (A), (C) and (D), wherein each crosslinking agent is present in the formulation in an amount of 5 to 50 phr, and at least one expanding agent (E2) suitable for expanding the formulation to a density of less than 130 kg/m³ for closed cell and less than 250 kg/m³ for open cell material, preferably less than 90 kg/m³, especially preferred less than 70 kg/m³, according to ISO 845. The expanding agent is present in the formulation in an amount of 15 to 200 phr.

The crosslinking/expansion system may comprise sulphur (e.g. elementary sulphur, thiurames, polysulphides, thiocarbamates, thioureas, thiazyls, sulphur-Si-O compounds, chlorothio-compounds etc.), metal oxide (e.g. zinc and/or magnesium oxide), or peroxide based crosslinkers and accelerators or any mixtures thereof; and nitrogen, carbon dioxide or water vapour releasing chemical blowing agents, expanding microspheres or clay or graphite, or any mixtures thereof. The specific combination of crosslinkable polymers (A), (C) and (D) of the claimed material will allow choosing the crosslinking and expansion system with a high degree of freedom, depending on the desired properties of the finally vulcanised and expanded product: metal oxides will crosslink (A) and (D), peroxides will crosslink (A) and (C), partially (D), and sulphur crosslinking will primarily lead to reaction on (C), but with sulphur donors and appropriate accelerator also (A) and -to a smaller extent- (D) can be incorporated into a common network. Combining the crosslinking methods -especially metal oxide and sulphur based- will lead to a homogeneous, strong interpenetrating network and controlled scorch (= desired pre-curing) which both is an essential basis for being able to obtain low densities after expansion: the gas potential created by temperature induced blowing gas release from the blowing agent needs to be entrapped in the material; pre-curing and a dense, but flexible polymer network will lead to 1) homogeneous nucleation (parallel formation of a vast quantity of equally sized and shaped cell nuclei) and 2) steady growth of cells. Additionally, as the viscosity of CSM is dropping significantly with temperature due to its partly thermoplastic nature. The resulting green strength of extruded CSM compounds is not sufficient for many applications, including foaming to low (=insulating) densities; the compound combination of the claimed material will lead to both higher green strength and subsequent scorch (controlled and desired pre-curing) which will eventually result in consistent surface quality and shape and low density fine cell expanded vulcanisate appropriate for thermal and/or acoustic insulation applications.

The formulation of the present invention comprises at least one filler (F) such as, but not limited to inorganic (metal or half metal) chalkogenides, carbonates, halogenides, hydroxides, hydrates, silica, carbon black etc., or any combinations thereof. The filler is present in the formulation in an amount of 50 to 600 phr, preferably 150 to 450 phr. The fillers are responsible for both improving mixing properties and stabilization of expanded products, as on the one hand they will facilitate mixing of low compatibility ingredients by perculation effects and on the other hand they will prevent restructuring (through unwanted interaction) by acting as a spacer. Preferred are fillers additionally providing a flame retardant and/or smoke suppression effect, especially preferred are aluminium hydroxide and/or magnesium hydroxide.

The formulation of the present invention may comprise further ingredients (G) such as, but not limited to flame retardants and synergists, biocides, plasticizers, stabilizers (e.g. versus heat, UV, ozone, depolymerisation/reversion etc.), colours (pigments, dyes) etc., of any kind in any ratio, including additives for improving its manufacturing, application, aspect and performance properties, such as, but not limited to inhibitors, retarders, accelerators, etc.; and/or additives for adapting it to the applications' needs, such as char-forming and/or intumescent additives, like phosphorous compounds, expanding vermiculite, perlite, graphite, to render the material self-intumescent in case of fire, e.g. for general protection purposes and/or to close and protect e.g. wall and bulkhead penetrations; and/or substances that will lead to a self-ceramifying effect to pipes, wall penetrations etc. in case of fire, such as boron compounds, silicon containing compounds etc.; and/or internal adhesion promoters to ensure self-adhesive properties in co-extrusion and co-lamination applications, such as silicate esters, functional silanes, polyols, etc.; and/or additives that act as internal adhesion promoters to ensure self-adhesive properties in co-extrusion and co-lamination applications, such as silicate esters, functional silanes, polyols etc.

The formulation of the present invention may furthermore comprise fibres (H) as long fibres, chopped fibres or pulp as both filler material and reinforcing agent, such as glass fibres, poly(aramide) fibres, and polyester fibres and so on, and any mixtures thereof.

The formulation of the present invention may comprise thermoplastic polymers (I), such as, but not limited to ABS, PE, PEEK, PEI, PET, PI, PP, PU, PVC, or any mixtures thereof. The thermoplastic polymer can be present in the formulation to a level of 5 to 250 phr.

The formulation of the present invention allows to incorporate additional elastomeric polymers (J) not being identical with (C) or (D) without changing the claimed material's properties, such as, but not limited to ACM/AEM, AU/EU, CM, CSR, (G)(E)CO, EPM/EPDM, EVM, FKM/F(E)PM, GPO, (F)(P)(V)MQ, HNBR, NR, SAN, SEBS, T or any mixtures thereof. Such elastomeric polymer is not considered as being part of the hundred parts of rubber in the sense of the present invention and can be present in the formulation of the present invention to a level of 5 to 30 phr.

The formulation of the present invention comprises 50 to 80 phr of said component (A), 15 to 150 phr of said component (B), 5 to 50 phr of said component (C), 5 to 45 phr of said component (D), and 50 to 600 phr of said component (F).

According to preferred embodiments, the formulation of the present invention comprises components (A) to (F) in the following amounts.
(i) component (A): 50 to 60 phr,
   component (B): 15 to 150 phr,
   component (C): 5 to 50 phr,
   component (D): 5 to 45 phr, and
   component (F): 50 to 600 phr.
(ii) component (A): 50 to 80 phr,
   component (B): 25 to 120 phr,
   component (C): 5 to 50 phr,
   component (D): 5 to 45 phr, and
   component (F): 50 to 600 phr.
(iii) component (A): 50 to 80 phr,
   component (B): 15 to 150 phr,
   component (C): 10 to 30 phr,
   component (D): 5 to 45 phr, and
   component (F): 50 to 600 phr.
(iv) component (A): 50 to 80 phr,
   component (B): 15 to 150 phr,
   component (C): 5 to 50 phr,
   component (D): 10 to 40 phr, and
   component (F): 50 to 600 phr.
(v) component (A): 50 to 80 phr,
   component (B): 15 to 150 phr,
   component (C): 5 to 50 phr,
   component (D): 5 to 45 phr, and
   component (F): 150 to 450 phr.

According to a more preferred embodiment, the formulation of the present invention comprises components (A) to (F) in the following amounts.
component (A): 50 to 60 phr,
component (B): 25 to 120 phr,
component (C): 10 to 30 phr,
component (D): 10 to 40 phr, and
component (F): 150 to 450 phr.

According to still more preferred embodiments, the formulation of the present invention comprises components (A) to (F) in the following amounts.
(i) component (A): 50 to 80 phr,
   component (B): 80 to 110 phr,
   component (C): 5 to 50 phr,
   component (D): 5 to 45 phr, and
   component (F): 50 to 600 phr.
(ii) component (A): 50 to 80 phr,
   component (B): 15 to 150 phr,
   component (C): 10 to 20 phr,
   component (D): 5 to 45 phr, and
   component (F): 50 to 600 phr.
(iii) component (A): 50 to 80 phr,
   component (B): 15 to 150 phr,
   component (C): 5 to 50 phr,
   component (D): 20 to 30 phr, and
   component (F): 50 to 600 phr.

According to a yet more preferred embodiment, the formulation of the present invention comprises components (A) to (F) in the following amounts.
component (A): 50 to 60 phr,
component (B): 80 to 110 phr,
component (C): 10 to 20 phr,
component (D): 20 to 30 phr, and
component (F): 150 to 450 phr.

According to a most preferred embodiment, the formulation of the present invention comprises the following components (A) to (F) in amounts mentioned in relation to preferred, more preferred, still more preferred and yet more preferred embodiments.
(A) CSM,
(B) chloroparaffin,
(C) butadiene rubber (BR),
(D) polychloroprene (CR).

The formulation of the present invention can be foamed and crosslinked to obtain an elastomer product which typically has a majorly closed or open cell foam, preferably a closed cell foam with a closed cell content of at least 70% relative to the total volume of cells as determined according to ISO 4590, and to a density of less than 150 kg/m³ for closed cell and less than 250 kg/m³ for open cell material, preferably less than 90 kg/m³, especially preferred less than 70 kg/m³ according to ISO 845, obtaining a thermal conductivity of less than 0.050 W/(mK) at 0 °C according to EN ISO 12667 or EN ISO 8497, respectively, which is a basic condition for thermal insulation material according to EN 14304. The resulting water vapour diffusion barrier property is at least µ 2000, preferably at least µ 3000, especially preferred at least µ 5000 according to EN 12086 or EN 13469, respectively. The water vapour barrier effect is positively influenced by compound (C).

A major advantage of the elastomer product of the present invention is the fact that it is highly fire retardant in combination with low smoke density created in case of burn, a combination which is difficult to achieve especially for rubbery materials: burning fire retardant elastomers usually create sooth or unstable char rendering the smoke dark and dense, or they will create a high energy of combustion when there is low smoke. These FR properties are no more asked for: the fire classification standard EN 13501 (test method: SBI according to EN 13823) requires the detection of heat/fire and smoke created simultaneously. Other non-building related standards, such as NFPA 130, ask for similar performance.

Another major advantage of the formulation of the present invention is the fact that it can be crosslinked by state-of-the-art, well-examined and economic methods like sulphur curing, and that co-vulcanisation, scorch and expansion-curing balances can be controlled by choosing the appropriate vulcanisation system.

Another advantage of the formulation of the present invention is the fact that all parts of the formulation are easily available on the market and comprise no regulatory or economic restrictions.

It is a further advantage of the formulation of the present invention that it can be produced and processed in an economic way on equipment as commonly used in the rubber industry, such as for mixing and shaping processes, e.g. by moulding, extrusion and other shaping methods. It shows versatility in possibilities of manufacturing and application. It can be extruded, co-extruded, laminated, moulded, co-moulded etc. as single item or multilayer and thus it can be applied in unrestricted shaping onto various surfaces in automotive, transport, aeronautics, building and construction, furniture, machinery engineering and many other industries.

It is a resulting advantage of the formulation of the present invention that it can be transformed and given shape by standard methods being widespread in the industry and that it does not require specialized equipment.

It is a resulting major advantage of the formulation of the present invention that it easily expandable to a well-performing flexible insulation (see table 3).

It is another advantage of the claimed material that it shows better mechanical properties, such as tensile strength, than standard flexible insulation due to its special composition (see table 3).

### Examples

In the following examples and comparative examples formulations were prepared in an internal mixer. The respective mixture -see table 1- was accelerated and blowing agent was added. The complete mixture was extruded through a large pin-die head and the resulting tube was cut and spread, then run through a vulcanisation channel at temperatures from 120 to 160 °C. The mixtures were vulcanised and expanded to planar material (sheet) of 19 mm thickness.

**Table 1: example formulations and comparative example formulations in phr**

| | C1* | C2* | C3 | C4 | C5 |
|---|---|---|---|---|---|
| NBR Nipol® 300W60 (Nippon Zeon, Japan) | **95** | **50** | - | - | - |
| BR Buna® CB25 (Lanxess, Germany) | **5** | **5** | **12** | **10** | **11** |
| CSM Toso® TS-430 (Tosoh, Japan) | - | - | **57** | **67** | **70** |
| CR Baypren® 211 | - | **45** | **31** | **23** | **10** |
| SBR Buna® SB 1500 (Lanxess, Germany) | - | - | - | - | **9** |
| *∑ rubber phr* | *100* | *100* | *100* | *100* | *100* |
| ATH Apyral® 60 (Nabaltec, Germany) | 350 | 350 | 350 | 380 | 380 |
| CP Hordalub® CP112 (Leuna Tenside, Germany) | 63 | 61 | 75 | 88 | 91 |
| N550 carbon black (Nhumo/LuV, Germany) | 5 | 5 | 5 | 5 | 5 |
| Chalk Microcarb® 4 (Avokal Heller, Germany) | 11 | 30 | - | - | - |
| generic FR package (antimony/deca) | 15 | 15 | 15 | 15 | 15 |
| generic plasticizer package (calcium stearate, naphthenic oil, PE wax) | 25 | 34 | 31 | 33 | 26 |

| | | | | | |
|---|---|---|---|---|---|
| *comparative example | | | | | |

**Table 2: abbreviations**

| | |
|---|---|
| NBR | Acrylonitrile-butadiene rubber |
| BR | Butadiene rubber |
| CSM | Chlorosulfonated polyethylene |
| CR | Chloroprene rubber |
| SBR | Styrene-butadiene rubber |
| ATH | Aluminium trihydrate |
| CP | Chloroparaffin |

The vulcanised and expanded samples were measured for density, mechanical strength, thermal conductivity and fire behaviour. The results can be seen in table 3

**Table 3: test results of examples and comparative examples**

| | **C1*** | **C2*** | **C3** | **C4** | **C5** |
|---|---|---|---|---|---|
| **Density ISO 845 [kg/m³]** | 57 | 78 | 72 | 68 | 56 |
| **Thermal conductivity at 0 °C EN ISO 12667 [W/(mK)]** | 0.040 | 0.053 | 0.049 | 0.045 | 0.040 |
| **Fire/smoke rating EN 13501-1 tube EN 13501-1 sheet** | E (s3) E (s3) | D_{L} -s3, d0 E (s3) | B_{L} -s1, d0 B-s2, d0 | B_{L}-s2, d0 B-s2, d0 | B_{L}-s1,d0 B-s2, d0 |
| **Fire/smoke rating NPFA 130** | fail | fail | passed/passed | passed/passed | passed/passed |
| **Fire/smoke rating ATSM E 84** | 100/400 | 50/350 | 25/50 | 50/100 | 25/50 |
| **Tensile strength** ISO 37 [N/mm²]** | 13.2 | 12.3 | 16.7 | 17.5 | 18.4 |

| | | | | | |
|---|---|---|---|---|---|
| * = comparative example **measured on 2 mm massive strips | | | | | |

## Claims

1. Expandable and crosslinkable formulation comprising:
(A) at least one type of chlorosulfonated polyethylene (CSM) which is present in the formulation in an amount of 50 to 80 phr (parts per hundred parts of rubber),
(B) at least one halogenated organic substance of a molecular weight of at least 500 g/mol which is present in the formulation in an amount of 15 to 150 phr and which is not (A) or (D),
(C) at least one polymer selected from the group consisting of poly(butadiene), poly(styrene butadiene), poly(acrylonitrile butadiene), poly(isobutene), poly(isoprene) and poly(isobutene-isoprene) which is present in the formulation in an amount of 5 to 50 phr,
(D) at least one halogen-containing polymer or halogenated polymer that is crosslinkable and which is present in the formulation in an amount of 5 to 45 phr and which is neither (A) nor (B),
(E1) at least one crosslinking agent suitable for crosslinking at least one of the components (A), (C) and (D), wherein each crosslinking agent is present in the formulation in an amount of 5 to 50 phr,
(E2) at least one expanding agent suitable for expanding the formulation which is present in the formulation in an amount of 15 to 200 phr, and
(F) at least one filler which is present in the formulation in an amount of 50 to 600 phr.

2. The formulation according to claim 1 wherein the CSM (A) is obtained from linear HDPE with a branching content of less than 3%.

3. The formulation according to claim 1 or claim 2 where the chlorine content of the CSM (A) is at least 20 weight-% relative to the total weight of CSM.

4. The formulation according to any of claims 1 to 3 wherein the halogen content of (B) is in the range of 40 to 80 weight-% relative to the total weight of (B).

5. The formulation according to any of claims 1 to 4 wherein the halogenated organic substance (B) is selected from halogenated paraffin and halogenated polyglycol, preferably from chlorinated paraffin and chlorinated polyglycol.

6. The formulation according to any of claims 1 to 5 wherein halogen-containing polymer (D) is selected from CR, BIIR, CIIR and CPE, and preferably CR.

7. Elastomer product obtainable by crosslinking and expanding the formulation defined in any of claims 1 to 6.

8. Elastomer product according to according to claim 7 which has a content of closed cells of at least 70% relative to the total volume of cells.

9. Elastomer product according to claim 7 or 8 wherein the material is expanded to a density of less than 250 kg/m³.

10. Elastomer product according to any of claims 7 to 9 wherein the material has a thermal conductivity of less than 0.050 W/(mK) at 0 °C and a water vapour diffusion barrier property of at least µ 2000.

## Patentansprüche

1. Expandierbare und vernetzbare Formulierung, umfassend:
(A) mindestens eine Art von chlorsulfoniertem Polyethylen (CSM), das in der Formulierung in einer Menge von 50 bis 80 phr (Teile pro einhundert Teile Gummipolymer) vorliegt,
(B) mindestens eine halogenierte organische Substanz mit einem Molekulargewicht von mindestens 500 g/mol, die in der Formulierung in einer Menge von 15 bis 150 phr vorliegt und die nicht (A) oder (D) ist,
(C) mindestens ein Polymer, ausgewählt aus der Gruppe, bestehend aus Poly(butadien), Poly(styrolbutadien), Poly(acrylnitril-butadien), Poly(isobuten), Poly(isopren) und Poly(isobutenisopren), das in der Formulierung in einer Menge von 5 bis 50 phr vorliegt,
(D) mindestens ein halogenhaltiges Polymer oder halogeniertes Polymer, das vernetzbar ist und das in der Formulierung in einer Menge von 5 bis 45 phr vorliegt und das weder (A) noch (B) ist,
(E1) mindestens ein Vernetzungsmittel, geeignet zur Vernetzung von mindestens einer der Komponenten (A), (C) und (D), wobei jedes Vernetzungsmittel in der Formulierung in einer Menge von 5 bis 50 phr vorliegt,
(E2) mindestens ein Treibmittel, geeignet zum Expandieren der Formulierung, das in der Formulierung in einer Menge von 15 bis 200 phr vorliegt, und
(F) mindestens einen Füllstoff, der in der Formulierung in einer Menge von 50 bis 600 phr vorliegt.

2. Formulierung gemäß Anspruch 1, wobei das CSM (A) aus linearem HDPE mit einem Verzweigungsgehalt von weniger als 3% erhalten wird.

3. Formulierung gemäß Anspruch 1 oder 2, wobei der Chlorgehalt des CSM (A) mindestens 20 Gew.-%, bezogen auf das Gesamtgewicht des CSM, beträgt.

4. Formulierung gemäß einem der Ansprüche 1 bis 3, wobei der Halogengehalt von (B) im Bereich von 40 bis 80 Gew.-%, bezogen auf das Gesamtgewicht von (B), liegt.

5. Formulierung gemäß einem der Ansprüche 1 bis 4, wobei die halogenierte organische Substanz (B) aus halogeniertem Paraffin und halogeniertem Polyglykol, bevorzugt aus chloriertem Paraffin und chloriertem Polyglykol, ausgewählt ist.

6. Formulierung gemäß einem der Ansprüche 1 bis 5, wobei das halogenhaltige Polymer (D) aus CR, BIIR, CIIR und CPE ausgewählt ist und bevorzugt CR ist.

7. Elastomerprodukt, erhältlich durch Vernetzen und Expandieren der in einem der Ansprüche 1 bis 6 definierten Formulierung.

8. Elastomerprodukt gemäß Anspruch 7, das einen Gehalt an geschlossenen Zellen von mindestens 70%, bezogen auf das Gesamtvolumen der Zellen, aufweist.

9. Elastomerprodukt gemäß Anspruch 7 oder 8, wobei das Material auf eine Dichte von weniger als 250 kg/m³ expandiert ist.

10. Elastomerprodukt gemäß einem der Ansprüche 7 bis 9, wobei das Material eine Wärmeleitfähigkeit von weniger als 0,050 W/(mK) bei 0°C und eine Wasserdampfdiffusions-Barriereeigenschaft von mindestens µ 2000 aufweist.

## Revendications

1. Formulation réticulable et expansible comprenant :
(A) au moins un type de polyéthylène chlorosulfoné (CSM) qui est présent dans la formulation dans une quantité de 50 à 80 parties pour cent parties de caoutchouc,
(B) au moins une substance organique halogénée d'un poids moléculaire d'au moins 500 g/mol qui est présent dans la formulation dans une quantité de 15 à 150 parties pour cent parties de caoutchouc et qui n'est pas (A) ou (D),
(C) au moins un polymère choisi parmi le groupe constitué du poly(butadiène), du poly(styrène butadiène), du poly(acrylonitrile butadiène), du poly(isobutène), du poly(isoprène) et du poly(isobutène-isoprène) qui est présent dans la formulation dans une quantité de 5 à 50 parties pour cent parties de caoutchouc,
(D) au moins un polymère contenant un halogène ou un polymère halogéné qui est réticulable et qui est présent dans la formulation dans une quantité de 5 à 45 parties pour cent parties de caoutchouc et qui ni (A) ni (B),
(E1) au moins un agent de réticulation adapté pour réticuler au moins l'un des composants (A), (C) et (D), dans lequel chaque agent de réticulation est présent dans la formulation dans une quantité de 5 à 50 parties pour cent parties de caoutchouc,
(E2) au moins un agent d'expansion adapté pour expanser la formulation qui est présent dans la formulation dans une quantité de 15 à 200 parties pour cent parties de caoutchouc, et
(F) au moins un agent de remplissage qui est présent dans la formulation dans une quantité de 50 à 600 parties pour cent parties de caoutchouc.

2. La formulation selon la revendication 1 dans laquelle le CSM (A) est obtenu à partir de PEHD linéaire avec une teneur de ramification inférieure à 3%.

3. La formulation selon la revendication 1 ou la revendication 2 où la teneur de chlore du CSM (A) est d'au moins 20% en poids par rapport au poids total de CSM.

4. La formulation selon l'une quelconque des revendications 1 à 3 dans laquelle le teneur d'halogène de (B) est dans un domaine de 40 à 80% en poids par rapport au poids total de (B).

5. La formulation selon l'une quelconque des revendications 1 à 4 dans laquelle la substance organique halogéné (B) est choisie parmi le paraffine halogénée et le polyglycol halogéné, préférablement parmi la paraffine chlorée et le polyglycol chloré.

6. La formulation selon l'une quelconque des revendications 1 à 5 dans laquelle le polymère contenant un halogène (D) est choisi parmi CR, BIIR, CIIR et CPE, et préférablement CR.

7. Produit élastomère qui peut être obtenu par réticulation et expansion de la formulation telle que définie dans l'une quelconque des revendications 1 à 6.

8. Produit élastomère selon la revendication 7 qui a une teneur de cellules fermées d'au moins 70% par rapport au volume total des cellules.

9. Produit élastomère selon la revendication 7 ou 8 dans lequel le matériau est expansé à une densité inférieure à 250 kg/m³.

10. Produit élastomère selon l'une quelconque des revendications 7 à 9 dans lequel le matériau a une conductivité thermique inférieure à 0,050 W/(mK) à 0°C et une propriété de barrière à la diffusion de la vapeur d'eau d'au moins 2000 µ.
